# EUROPEAN PATENT SPECIFICATION

(11) **EP 1 957 597 B1**
(45) Date of publication and mention of the grant of the patent: **30.04.2014**
(21) Application number: 06844428.0
(22) Date of filing: 17.11.2006
(51) Int. Cl.: C09J 183/04

(54) **CONTINUOUS PROCESS FOR PRODUCTION OF SILICONE PRESSURE SENSITIVE ADHESIVES**
KONTINUIERLICHES VERFAHREN ZUR HERSTELLUNG DRUCKEMPFINDLICHER SILICIUM-HAFTMITTEL
PROCEDE CONTINU POUR LA PRODUCTION D'ADHESIFS AU SILICONE SENSIBLES A LA PRESSION

(30) Priority: 08.12.2005 US 748704 P
(43) Date of publication of application: 20.08.2008
(73) Proprietor: Dow Corning Corporation, Midland, Michigan 48686-0994 (US)
(72) Inventor: COOK, Leon, Neal, Midland, MI 48640 (US); DURFEE, Loren, Dean, Midland, MI 48642 (US); EKELAND, Robert, Alan, Midland, MI 48640 (US); HUBBARD, Tricia, A., Midland, MI 48642 (US); LOWER, Loren, Dale, Sanford, MI 48657 (US); WALKOWIAK, Jeff, Alan, Bay City, MI 48708 (US)
(74) Representative: f & e patent
(86) International application number: PCT/US2006/044832
(87) International publication number: WO 2007/067332

(56) References cited:
- WO-A-2004/037941
- US-A- 4 065 532

## Description

### Technical Field

This invention relates to a continuous process for producing a silicone pressure sensitive adhesive (PSA). An extruder is useful in the method.

### Background

PSAs are known in the art. For purposes of this application, a PSA is a product of a bodying reaction between a hydroxyl-functional polydiorganosiloxane polymer (polymer) and a hydroxyl-functional polyorganosiloxane resin (resin). PSAs are disclosed in U.S. Patents 4,584,355; 4,585,836; 4,591,622; 5,726,256; 5,861,472; and 5,869,556. U.S. Patents 5,726,256; 5,861,472 and 5,869,556 disclose the chemical compositions of PSAs.

PSAs are prepared in a batch process by dissolving the polymer and resin with a catalyst in a solvent and heating the resulting composition at the reflux temperature of the solvent while removing water. The batch process suffers from various drawbacks. The reaction temperature is limited to the reflux temperature of the solvent (*i.e*., the process operates at a maximum temperature based on the reflux temperature of the solvent selected). High residence time is necessary to complete the reaction (on the order of 30 minutes to 2 hours, or even more depending on factors such as batch size and reactivity of the raw materials selected). This high residence time may lead to some degradation of the resulting PSA, thereby changing the properties of the PSA, introducing impurities into the PSA, or both. The batch process does not remove residual catalyst and unreactive volatile siloxane impurities; additional processing steps and equipment are required if catalyst and volatile siloxanes will be removed.

### Summary

Surprisingly, a continuous method can be used for production of a PSA comprising:
I) mixing ingredients comprising:
   (A) a hydroxyl-functional polydiorganosiloxane polymer,
   (B) a hydroxyl-functional polyorganosiloxane resin,
   (C) a solvent,
   (D) a catalyst selected from weak carboxylic acids or metal salt thereof wherein the metal is selected from Li, Na, K and Ca, and optionally
   (E) a stabilizer; and
II) heating the ingredients at a temperature above the boiling point of the solvent as the ingredients pass through a reaction zone of a continuous mixing apparatus for a residence time sufficient for bodying ingredients (A) and (B) to produce a pressure sensitive adhesive containing volatile species comprising water, the solvent, the catalyst and volatile siloxanes; and
III) removing the volatile species from the pressure sensitive adhesive such that the volatile siloxane concentration in the pressure sensitive adhesive is less than or equal to 3 weight %,
   the volatile siloxanes being selected from the neopentamer and unreactive cyclic polyorganosiloxanes D4-D10.

### Brief Description of the Drawings

Figure 1 shows gel permeation chromatography results of the PSA produced in comparative example 1.
Figure 2 shows area percent volatiles by gel permeation chromatography (GPC) results of PSAs produced using varying amounts of catalyst in comparative example 1.
Figure 3 is a graph of polymer molecular weight versus time at reflux temperature of PSAs prepared in comparative example 1.
Figure 4 is a graph of volatile species content versus temperature in example 1.
Figure 5 is a graph of molecular weight versus temperature in example 1.
Figure 6 is a graph showing the amount of neopentamer decreasing using the continuous method of this invention in example 2.
Figure 7 is a graph showing the amount of neopentamer decreasing using the continuous method of this invention in example 3.
Figure 8 is a graph showing the amount of neopentamer decreasing when operating the continuous method of this invention at reduced pressure in example 4.

### Detailed Description of the Invention

All amounts, ratios, and percentages are by weight unless otherwise indicated. The following is a list of definitions for purposes of this application.

The articles "a", "an" and "the" each mean one or more.

"Bodying" means reacting (A) a hydroxyl-functional polydiorganosiloxane polymer and (B) a hydroxyl-functional polyorganosiloxane resin to increase molecular weight or crosslinking, or both.

"PSA" means a silicone pressure sensitive adhesive. The silicone pressure sensitive adhesive is prepared by sufficient bodying of (A) a hydroxyl-functional polydiorganosiloxane polymer and (B) a hydroxyl-functional polyorganosiloxane resin such that the resulting reaction product exhibits stable viscosity during its shelf life and desired cohesive strength and appearance.

### Continuous Method for Producing a PSA

This invention relates to a method for continuous production of a PSA. The method comprises:
I) mixing ingredients comprising:
   (A) a hydroxyl-functional polydiorganosiloxane polymer,
   (B) a hydroxyl-functional polyorganosiloxane resin,
   (F) a solvent,
   (G) a catalyst selected from weak carboxylic acids or metal salt thereof wherein the metal is selected from Li, Na, K and Ca, and optionally
   (H) a stabilizer; and
II) heating the ingredients at a temperature above the boiling point of the solvent as the ingredients pass through a reaction zone of a continuous mixing apparatus for a residence time sufficient for bodying ingredients (A) and (B) to produce a pressure sensitive adhesive containing volatile species comprising water, the solvent, the catalyst and volatile siloxanes; and
III) removing the volatile species from the pressure sensitive adhesive such that the volatile siloxane concentration in the pressure sensitive adhesive is less than or equal to 3 weight %,
   the volatile siloxanes being selected from the neopentamer and unreactive cyclic polyorganosiloxanes D4-D10.
One skilled in the art would recognize that steps I), II), and III) may be performed concurrently.

The volatile species removed are water, volatile siloxanes, and the solvent (ingredient (C)). Water is generated as a by-product of reacting ingredients (A) and (B). Volatile siloxanes may be impurities present in ingredients (A) or (B) (*e.g*., the neopentamer described below) or that may form *in situ* as by-products of reacting ingredients (A) and (B), *e.g*., unreactive cyclic polyorganosiloxanes such as D4, D5, D6, D7, D8, D9, and D10. When desired, the catalyst, the stabilizer, or both, may also be removed as a volatile species. "Removing essentially all volatile species" means that method conditions produce a PSA containing no more than 3 % of volatile siloxanes as measured by gel permeation chromatography (GPC).

### Ingredient (A) hydroxyl-functional polydiorganosiloxane polymer

Ingredient (A) is a hydroxyl-functional polydiorganosiloxane polymer (polymer). Ingredient (A) may comprise repeating units of formula R₂SiO_{2/2} and an average, per molecule, of two endblocking units of formula R₃SiO_{1/2}, where R is a monovalent organic group or a hydroxyl group. However, ingredient (A) has an average of at least two hydroxyl groups per molecule. Ingredient (A) may be a hydroxyl-endblocked polydiorganosiloxane. Ingredient (A) may be a liquid or a gum under ambient conditions. When ingredient (A) is a gum, the gum may have a weight average molecular weight ranging from 100,000 to 1,000,000. Ingredient (A) may be a single polymer or a combination comprising two or more polymers, differing in at least one property such as structure, sequence, viscosity, molecular weight, and substituent groups.

Examples of ingredient (A) are disclosed by U.S. Patent 5,726,256 at col. 4, lines 16-56 and U.S. Patent 5,861,472 at col. 3, line 11 to col. 4, line 43. Examples of suitable hydroxyl-terminated polydiorganosiloxane polymers include:
HO(Me)₂SiO(Me₂SiO)ₐSi(Me)₂OH,
HO(Me)₂SiO(Me₂SiO)_{0.94a}(Ph₂SiO)_{0.06a}Si(Me)₂OH,
HO(Ph₂)SiO(Me₂SiO)_{0.94a}(Ph₂SiO)_{0.06a}Si(Ph₂)OH,
HO(Me₂)SiO(Me₂SiO)_{0.95a}[(Vi)(Me)SiO]_{0.05a}Si(Me₂)OH, and
HO(Vi₂)SiO(Me₂SiO)_{0.95a}[(Vi)(Me)SiO]_{0.05a}Si(Vi₂)OH,
where the average value of subscript a is such that it provides a viscosity at 25 °C ranging from 100 to 10,000,000 mm²/s.

The amount of ingredient (A) used to prepare the PSA may range from 30 to 60 parts by weight based on 100 parts by weight of ingredients (A) and (B) combined. The amount of ingredient (B) used to prepare the PSA may range from 40 to 70 parts by weight. Alternatively, the amount of ingredient (A) may range from 30 to 50 parts by weight, and the amount of ingredient (B) may range from 50 to 70 parts by weight. Alternatively, the amount of ingredient (A) may range from 38 to 47 parts by weight, and the amount of ingredient (B) may range from 53 to 62 parts by weight.

### Ingredient (B) hydroxyl-functional polyorganosiloxane resin

Ingredient (B) is a hydroxyl-functional polyorganosiloxane resin (resin). Resins are known in the art and may comprise R¹₃SiO_{1/2} (M) units and SiO_{4/2} (Q) units, where each R¹ is independently a hydroxyl group or monovalent organic group. Suitable organic groups for R¹ include halogenated hydrocarbon groups such as chloroalkyl and fluoroalkyl groups and hydrocarbon groups such as alkyl groups, cycloaliphatic groups, aryl groups, and alkenyl groups.

The resin may have a molar ratio of M to Q units of 0.5 to 1.5 M units per Q unit (M/Q ratio), alternatively 0.6 to 1.2. The resin may further comprise HO-SiO_{3/2} (T^{OH}) units. The resin may contain less than 1 % to 4 % hydroxyl functionality. The resin may further comprise a small amount of a low molecular weight material comprising a neopentamer of the formula (R¹₃SiO)₄Si, which is a volatile siloxane impurity formed during preparation of the resin. The resin may be prepared by methods known in the art, such as those disclosed in U.S. Patents 2,676,182; 3,627,851; and 3,772,247.

Ingredient (B) may be a single resin or a combination comprising two or more resins differing in at least one property such as structure, viscosity, molecular weight, and substituent groups. The resin may have a number average molecular weight ranging from 1,500 to 15,000, alternatively 3,000 to 7,500, alternatively 3,500 to 6,500 as measured by gel permeation chromatography.

Examples of suitable resins are disclosed in U.S. Patent 5,726,256, col. 2, line 30 to col. 3, line 60 and U.S. Patent 5,861,472 col. 4, line 44 to col. 5, line 45. Examples of M units in the resin include Me₃SiO_{1/2}, Me₂ViSiO_{1/2}, Me₂PhSiO_{1/2}, Ph₂MeSiO_{1/2}, where Me means methyl, Vi means vinyl, and Ph means phenyl.

### Ingredient (C) solvent

Ingredient (C) is a solvent. Ingredient (B) may be dissolved in all or a portion of the solvent for ingredient (C) before ingredients (B) and (C) are combined with ingredient (A) and any optional ingredients, for example, when ingredient (B) is prepared in a solvent. Examples of suitable organic solvents for ingredient (C) include a hydrocarbon liquid exemplified by an aromatic hydrocarbon such as benzene, toluene, xylene, or a combination thereof; or an aliphatic hydrocarbon such as hexane, heptane, cyclohexane, or a combination thereof. Alternatively, the organic solvent may by a hydrocarbon mixture such as naphtha or mineral spirits. Alternatively, the organic solvent may be a halogenated hydrocarbon such as a chlorocarbon or an oxygenated hydrocarbon such as an ester, e.g., ethyl acetate, an ether, e.g., dibutyl ether, a ketone, *e.g*., methylisobutyl ketone, an alcohol, *e.g*., methanol or ethanol, or a combination thereof. Alternatively, ingredient (C) may comprise a siloxane solvent unreactive with ingredients (A) and (B). Useful silicone solvents are exemplified by, but not limited to linear siloxanes such as hexamethyldisiloxane and cyclic siloxanes such as octamethylcyclotetrasiloxane, and decamethylcyclopentasiloxane. The amount of solvent selected depends on various factors including the viscosity of the ingredients when combined and the handling capabilities of the equipment selected as the continuous mixing apparatus. However, the amount of solvent may range from 5 to 90 % based on the combined weights of ingredients (A), (B), and (C).

### Ingredient (D) catalyst

Ingredient (D) is a condensation reaction catalyst. The amount of ingredient (D) depends on various factors including the type of catalyst selected, the selection of ingredients (A) and (B), the temperature, and the desired degree of reaction between ingredients (A) and (B).

Ingredient (D) comprise a weak carboxylic acid or metal salt thereof. Examples of weak carboxylic acids include carboxylic acids such as acetic acid, propionic acid, butanoic acid, and formic acid. Examples of metal salts include metal salts of these carboxylic acids where the metal may be Li, Na, K, Ce, or Ca, *e.g*., potassium formate and potassium acetate. However, when present, the amount of ingredient (D) may range from 5 to 10,000, alternatively 5 to 3,000 ppm, based on the combined weight of ingredients (A) and (B) when a weak organic acid or metal salt thereof is used. Examples of weak carboxylic acid, or metal salt thereof, catalysts are disclosed by U.S. 5,726,756 at col. 5, lines 5-11.

### Optional Ingredient (E) stabilizer

Optional ingredient (E) is a stabilizer. The exact stabilizer selected depends on various factors including the reactivity of ingredients (A) and (B), the desired degree of reaction, and the catalyst selected as ingredient (D), if any. However, optional ingredient (E) may be a silyl phosphate such as a monosilyl phosphate, a disilyl phosphate, or a trisilyl phosphate or a rare earth metal salt of a fatty acid. The monosilyl phosphate may have general formula (R¹⁰₃SiO)(X)₂P=O. The disilyl phosphate may have general formula (R¹⁰₃SiO)₂(X)P=O. The trisilyl phosphate may have general formula (R¹⁰₃SiO)₃P=O. In these formulae, each R¹⁰ is independently an alkyl group and each X is a hydrogen atom or a hydroxyl group. Examples of silyl phosphates include trimethylsilyl dihydrogen phosphate, bis(trimethylsilyl) hydrogen phosphate, tris(trimethylsilyl)phosphate, or a combination thereof. Examples of suitable silyl phosphates are disclosed in U.S. Patent 5,041,586. Examples of rare earth metals suitable for forming this salt include, cerium, lanthanum and praseodymium with cerium being typical. The fatty acid generally contins 6 to 18 carbon atoms with 8 carbon atoms being typical. The typical salt is cerium octoate. Typically, the rare earth metal salt, if used, is in the form of a solution of hexane, heptane, toluene, xylene, naptha, mineral spirits and ketones. The amount of ingredient (E) may range from 0 to 1000 parts per million based on the combined weight of ingredients (A) and (B), typically 10 to 300 parts per million.

### Method Conditions

The exact conditions for the method depend on various factors including the specific ingredients selected and the desired properties of the PSA to be produced, and these conditions may be determined by routine experimentation based on the following principles.

### Temperature

The temperature at which the ingredients are heated in the reaction zone depends on various factors including the catalyst selected, the solvent selected, the reactivity of ingredients (A) and (B) selected, and the desired properties of the PSA to be produced. However, the temperature may range from 100 °C to 300 °C, alternatively 110 °C to 200 °C. Removal of volatile species including the catalyst and the volatile siloxanes such as the neopentamer and unreactive cyclic polyorganosiloxanes may be more effective at higher temperatures. When producing PSAs, the temperature may have a strong Arrhenius impact on the degree to which the molecular weight of the polydiorganosiloxane is decreased, which increases adhesion and decreases viscosity. Without wishing to be bound by theory, temperatures above 300 °C may cause excessive degradation of the PSA.

### Pressure

Pressure in the continuous mixing apparatus may range from full vacuum to atmospheric pressure. However, volatile species may be removed more efficiently by operating the method pressure below atmospheric pressure. The method may optionally further comprise sparging a gas through all or a portion of the reaction zone to aid removal of the volatile species.

### Residence Time

Residence time of the ingredients in the reaction zone will depend on various factors including the molecular weight of the PSA desired, the reactivity of the ingredients, the amount of volatile species to be removed, the continuous mixing apparatus selected, and the temperature. Residence time may be less than 20 minutes, alternatively residence time may range from 5 seconds to 5 minutes. Without wishing to be bound by theory, it is thought that reaction rate approximately doubles for every 10 °C, therefore residence time decreases as temperature increases up to a point where degradation of the PSA becomes excessive. Residence time is sufficiently long, however, to allow for removal of volatile species and to provide sufficient mixing and sufficient degree of reaction using the apparatus. Using the guidelines discussed herein, one of ordinary skill in the art would be able to optimize the process conditions without undue experimentation.

### Addition of Ingredient (A)

The method may optionally further comprise preparing the hydroxyl-functional polydiorganosiloxane polymer using a continuous process before mixing the ingredients as described above. Continuous processes for preparing polydiorganosiloxane polymers (such as gums) are known in the art and are exemplified by the process described in U.S. Patent 6,221,993. The apparatus used to prepare the hydroxyl-functional polydiorganosiloxane polymer may be the same as the continuous mixing apparatus used in the method above.

### Continuous Mixing Apparatus

The continuous mixing apparatus used in the method of this invention may be any apparatus capable of continuously mixing, heating, and devolatilizing the ingredients as they pass through the apparatus. The continuous mixing apparatus is exemplified by a devolatilizing extruder. The devolatilizing extruder may be a single-screw or multiple-screw extruder, such as a twin-screw extruder.

The continuous mixing apparatus may have one reaction zone or multiple reaction zones. For example, the hydroxyl-functional polydiorganosiloxane polymer may be prepared in a first reaction zone of the continuous mixing apparatus and thereafter the PSA may be prepared in a second reaction zone of the same continuous mixing apparatus. The multiple reaction zones may operate at the same method conditions.

Alternatively, the multiple reaction zones may operate at different method conditions. For example, the ingredients may pass through a first reaction zone and the resulting product may subsequently pass through a second reaction zone having at least one property different from that of the first reaction zone. For example, the second (and any subsequent) reaction zone may operate at a higher temperature than a preceding reaction zone. Alternatively, the second (and any subsequent) reaction zones may operate at lower pressure than a preceding reaction zone. The multiple reaction zones may be built into a single continuous mixing apparatus, or alternatively, the continuous mixing apparatus may have a single reaction zone, and a product prepared by a pass through this continuous mixing apparatus may subsequently be passed through the same apparatus multiple times. Without wishing to be bound by theory it is thought that multiple reaction zones improve removal of volatile species.

### Compounding the PSA with Other Ingredients

The method of this invention may optionally further comprise compounding the PSA into a formulation. An additional ingredient may be compounded with the PSA. The additional ingredient may be added using a continuous method. The additional ingredient may be added using the same continuous mixing apparatus by, for example, adding the additional ingredient to the apparatus downstream of the reaction zone or by making an additional pass through the apparatus. Alternatively, the additional ingredient may be added using a different apparatus.

The additional ingredient is exemplified by i) an MQ resin, ii) a curable polydiorganosiloxane, iii) a catalyst, iv) a crosslinker, v) a cure modifier, vi) a filler, vii) a neutralizing agent, viii) a stabilization additive, ix) some or all of the volatile species, x) an additional solvent, xi) an adhesion promoter, and a combination thereof. When ingredients comprising i), ii), iii) and iv) are added to the PSA, the resulting formulation is a moisture curing PSA formulation. This moisture curing PSA formulation may be stripped of solvent (*e.g*., applied as a solid or melt) or may be used from solvent.

Ingredient i) is an MQ resin exemplified by DOW CORNING® 40X resins, such as 406 and 407 resins. The MQ resin may be a resin described above as ingredient (B). Alternatively, the MQ resin may be treated. Treated MQ resins are exemplified by DOW CORNING® 5-7104 and DOW CORNING® 6-3444, which are commercially available from Dow Coming Corporation of Midland, Michigan, U.S.A. The treated MQ resin may be prepared from an MQ resin described above as ingredient (B).

When ingredient i) is a treated MQ resin, the treated MQ resin may be prepared from the MQ resin described above by dissolving the MQ resin, a treating agent, and an acid catalyst in a solvent and heating the resulting combination until the hydroxyl content of the MQ resin is 0 to 2 %, alternatively 0.5 % to 1 %. The treating agent may be a silane of the formula R²₃SiR³, where each R² is independently a monovalent hydrocarbon group such as methyl, vinyl, or phenyl, alternatively methyl; and R³ is a group reactive with silanol. The acid catalyst may be trifluoroacetic acid. The solvent may be a solvent described herein, such as xylene. The treating process reacts the R³ substituted silicon atom a hydroxyl group in the MQ resin, thereby linking the R²₃Si- group with a silicon atom in the MQ resin through a divalent oxygen atom and forming ingredient a).

Ingredient i) can be a single MQ resin or a combination comprising two or more MQ resins that differ in at least one of the following properties: average molecular weight, siloxane units, and sequence. Ingredient i) may have a ratio of M units to Q units (M:Q) of 0.5 to 1.2, alternatively 0.89:1 to 1:1. Ingredient i) may have a number average molecular weight of 1,500 to 8,000, alternatively 5,000. Ingredient i) may have a weight average molecular weight of 3,000 to 40,000, alternatively 15,000. Ingredient i) may be added in an amount of 5 % to 50 % based on the weight of the moisture curing PSA formulation.

Ingredient ii) is a curable polydiorganosiloxane terminated with a condensation reactable group. Ingredient ii) may comprise an α,ω-difunctional-polydiorganosiloxane of the formula (R⁵)_{3-y}R⁴_{y}SiO-(R⁴₂SiO)ₓ-SiR⁴_{y}(R⁵)_{3-y}, where each R⁴ is independently a monovalent organic group, each R⁵ is independently a hydrolyzable substituent, x is an integer having a value of 200 to 1,000, and y is 0, 1, or 2; alternatively y is 0.

Suitable organic groups for R⁴ include, but are not limited to, monovalent substituted and unsubstituted hydrocarbon groups. Examples of monovalent unsubstituted hydrocarbon groups for R⁴ include, but are not limited to, alkyl such as methyl, ethyl, propyl, pentyl, octyl, undecyl, and octadecyl; cycloalkyl such as cyclohexyl; aryl such as phenyl, tolyl, xylyl, benzyl, and 2-phenylethyl. Examples of monovalent substituted hydrocarbon groups for R⁴ include, but are not limited to, monovalent halogenated hydrocarbon groups such as chlorinated alkyl groups such as chloromethyl and chloropropyl groups; fluorinated alkyl groups such as fluoromethyl, 2-fluoropropyl, 3,3,3-trifluoropropyl, 4,4,4-trifluorobutyl, 4,4,4,3,3-pentafluorobutyl, 5,5,5,4,4,3,3-heptafluoropentyl, 6,6,6,5,5,4,4,3,3-nonafluorohexyl, and 8,8,8,7,7-pentafluorooctyl; chlorinated cycloalkyl groups such as 2,2-dichlorocycliopropyl, 2,3-dichlorocyclopentyl; and fluorinated cycloalkyl groups such as 2,2-difluorocyclopropyl, 2,3-difluorocyclobutyl, 3,4-difluorocyclohexyl, and 3,4-difluoro-5-methylcycloheptyl. Examples of monovalent substituted hydrocarbon groups for R⁴ include, but are not limited to, hydrocarbon groups substituted with oxygen atoms such as glycidoxyalkyl, and hydrocarbon groups substituted with nitrogen atoms such as aminoalkyl and cyano-functional groups such as cyanoethyl and cyanopropyl- Alternatively, each R⁴ may be an alkyl group.

Suitable hydrolyzable substituents for R⁵ include, but are not limited to, a halogen atom, an acetamido group, an acetoxy group, an acyloxy group, an alkoxy group, an amido group, an amino group, an aminoxy group, a hydroxyl group, an oximo group, a ketoximo group, a methylacetamido group, or an alkoxysilylhydrocarbylene group, and x is an integer having a value of 200 to 700.

Alternatively, each R⁴ may be an alkyl group such as methyl, each R⁵ may be a hydroxyl group, or a trialkoxysilethylene group, and x may have a value of 500 to 70.

Alkoxysilylhydrocarbylene-endblocked polydiorganosiloxanes may be prepared by reacting a vinyl-terminated, polydimethylsiloxane with (alkoxysilylhydrocarbyl)tetramethyldisiloxane. Alkoxysilylhydrocarbylene-endblocked polydiorganosiloxanes are known in the art and are disclosed in U.S. Patents 4,962,076; 5,051,455; and 5,053,442. Suitable alkoxysilylhydrocarbylene-endblocked polydiorganosiloxanes may have the formula: 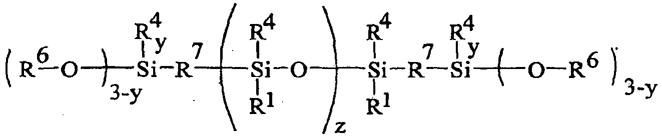 where R⁴ is as described above; each R⁶ is independently an alkyl group such as methyl, ethyl, propyl, or butyl; each R⁷ is a divalent hydrocarbon group or a combination of a divalent hydrocarbon group and a divalent siloxane group; each y is independently 0, 1, or 2; and z has a value of 200 to 1,000.

R⁷ may be an alkylene group such as ethylene, propylene, or hexylene; an arylene group such as phenylene, or an alkylarylene group such as: 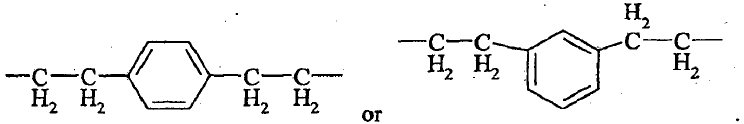 Alternatively, each R⁴ may be methyl, each R⁶ may be methyl, each R⁷ may be ethylene, and y may be 0.

Ingredient ii) can be a single polydiorganosiloxane or a combination comprising two or more polydiorganosiloxanes that differ in at least one of the following properties: average molecular weight, siloxane units, sequence, and viscosity. The amount of ingredient b) may range from 5% to 25 % based on the weight of the moisture curing PSA formulation.

Ingredient iii) is a catalyst that facilitates condensation reaction. The catalyst may be a Lewis acid; a primary, secondary, or tertiary organic amine; a metal oxide; a titanium compound; a tin compound; a zirconium compound; or a combination thereof. Suitable catalysts are known in the art and are exemplified by the catalysts described in U.S. Patent 4,753,977 at col. 4, line 35 to col. 5, line 57. The amount of ingredient iii) depends on various factors including the type of catalyst selected and the choice of the remaining components in the composition, however the amount of ingredient iii) may range from 0.5 % to 1.5 % based on the weight of the moisture curing PSA formulation.

Ingredient iii) may comprise a titanium catalyst. Suitable titanium catalysts include organofunctional titanates, siloxytitanates, and combinations thereof. Organofunctional titanates are exemplified by 1,3-propanedioxytitanium bis(ethylacetoacetate); 1,3-propanedioxytitanium bis(acetylacetonate); diisopropoxytitanium bis(acetylacetonate); 2,3-di-isopropoxy-bis(ethylacetate)titanium; titanium naphthenate; tetrapropyltitanate; tetrabutyltitanate; tetraethylhexyltitanate; tetraphenyltitanate; tetraoctadecyltitanate; tetrabutoxytitanium; tetraisopropoxytitanium; ethyltriethanolanunetitanate; a betadicarbonyltitanium compound such as bis(acetylacetonyl)diisopropyltitanate; or a combination thereof. Other organofunctional titanates are exemplified by those in U.S. Patent 4,143,088 at col. 7, line 15 to col. 10, line 35. Siloxytitanates are exemplified by tetrakis(trimethylsiloxy)titanium, bis(trimethylsiloxy)bis(isopropoxy)titanium, or a combination thereof.

The catalyst may comprise a tin compound. Suitable tin compounds are exemplified by dibutyltindilaurate; dibutyltindiacetate; dibutyltindimethoxide; carbomethoxyphenyl tin tris-uberate; tin octoate; isobutyl tin triceroate; dimethyl tin dibutyrate; dimethyl tin dineodeconoate; triethyl tin tartrate; dibutyl tin dibenzoate; tin oleate; tin naphthenate; butyltintri-2-ethylhexoate; tin butyrate; or a combination thereof.

The catalyst may comprise a zirconium compound. Suitable zirconium compounds are exemplified by zirconium octoate.

Ingredient iv) is a crosslinker that may be added in an amount of 0.5 % to 20 % based on the weight of the moisture curing PSA formulation. Ingredient iv) may be a silane, an oligomeric reaction product of the silane, or a combination thereof. The silane may have formula R⁸(₄₋ₐ)SiR⁹ₐ, where each R⁸ independently represents a monovalent organic group, each R⁹ independently represents a hydrolyzable substituent, and subscript a has a value of 2 to 4, alternatively 3 to 4. Alternatively, the optional crosslinker may be an oligomeric reaction product having formula: R⁸Si(OSi(OR⁹)₃)₃.

Suitable organic groups for R⁸ include, but are not limited to, monovalent substituted and unsubstituted hydrocarbon groups. Examples of monovalent unsubstituted hydrocarbon groups for R⁸ include, but are not limited to, alkyl such as methyl, ethyl, propyl, pentyl, octyl, undecyl, and octadecyl; cycloalkyl such as cyclohexyl; aryl such as phenyl, tolyl, xylyl, benzyl, and 2-phenylethyl. Examples of monovalent substituted hydrocarbon groups for R⁸ include, but are not limited to, monovalent halogenated hydrocarbon groups such as chlorinated alkyl groups such as chloromethyl and chloropropyl groups; fluorinated alkyl groups such as fluoromethyl, 2-fluoropropyl, 3,3,3-trifluoropropyl, 4,4,4-trifluorobutyl, 4,4,4,3,3-pentafluorobutyl, 5,5,5,4,4,3,3-heptafluoropentyl, 6,6,6,5,5,4,4,3,3-nonafluorohexyl, and 8,8,8,7,7-pentafluorooctyl; chlorinated cycloalkyl groups such as 2,2-dichlorocycliopropyl, 2,3-dichlorocyclopentyl; and fluorinated cycloalkyl groups such as 2,2-difluorocyclopropyl, 2,3-difluorocyclobutyl, 3,4-difluorocyclohexyl, and 3,4-difluoro-5-methylcycloheptyl. Examples of monovalent substituted hydrocarbon groups for R⁸ include, but are not limited to, hydrocarbon groups substituted with oxygen atoms such as glycidoxyalkyl, and hydrocarbon groups substituted with nitrogen atoms such as aminoalkyl and cyano-functional groups such as cyanoethyl and cyanopropyl. Alternatively, each R⁸ may be an alkyl group.

Examples of hydrolyzable substituents for R⁹ include, but are not limited to, halogen atoms, acetamido groups, acetoxy groups, acyloxy groups, alkoxy groups, amido groups, amino groups, aminoxy groups, oximo groups, ketoximo groups, and methylacetamido groups. Alternatively, each R⁹ may be an alkoxy group. Suitable alkoxy groups for R⁹ included, but are not limited to, methoxy, ethoxy, propoxy, and butoxy.

The alkoxysilanes for ingredient iv) may include dialkoxysilanes, trialkoxysilanes, tetraalkoxysilanes, and combinations thereof. Ingredient iv) may comprise a dialkoxysilane selected from chloromethylmethyldimethoxysilane, chloromethylmethyldiethoxysilane, dimethyldimethoxysilane, methyl-n-propyldimethoxysilane, (2,2-dichlorocyclopropyl)-methyldimethoxysilane, (2,2-difluorocyclopiopyl)-methyldiethoxysilane, (2,2-dichlorocyclopropyl)-methyldiethoxysilane, fluoromethyl-methyldiethoxysilane, fluoromethyl-methyldimethoxysilane, or a combination thereof.

Ingredient iv) may comprise a trialkoxysilane selected from methyltrimethoxysilane, ethyltrimethoxysilane, propyltrimethoxysilane, isobutyltrirnethoxysilane, cyclopentyltrimethoxysilane, hexyltrimethoxysilane, phenyltrimethoxysilane, 2-ethyl-hexyltrimethoxysilane, 2,3-dimethylcyclohexyltrimethoxislane, glycidoxypropyltrimethoxysilane, aminoethylaminopropyltrimethoxysilane, (ethylenediaminepropyl)trimethoxysilane, 3-methacryloxypropyltrimethoxysilane, chloromethyltrimethoxysilane, 3-chloropropyltrimethoxysilane, trichlorophenyltrimethoxysilane, 3,3,3-trifluoropropyl trimethoxysilane, 4,4,4,3,3-pentafluorobutyltrimethoxysilane, 2,2-difluorocyclopropyltriethoxysilane, methyltriethoxysilane, cyclohexyltriethoxysilane, chloromethyltriethoxysilane, tetrachlorophenyltriethoxysilane, fluoromethyltriethoxysilane, methyltriisopropoxysilane, methyltriacetoxysilane, ethyltricetoxysilane, methyl-tris(methoxyethoxy)silane, n-propyl-tris(3-methoxyethoxy)silane, phenyltris-(methoxyethoxy)silane, vinyltrimethoxysilane, or a combination thereof.

Ingredient iv) may comprise a tetraalkoxysilane selected from tetraethoxysilane, tetrapropoxysilane, tetrabutoxysilane, or a combination thereof.

Alternatively, each R⁹ may be a ketoximo group. Examples of ketoximosilanes for ingredient iv) include, but are not limited to, tetra(methylethylketoximo)silane, methyl-tris-(methylethylketoximo)silane, vinyl-tris-(methylethylketoximo)silane, and combinations thereof. When ingredient iv) comprises a ketoximosilane, then a catalyst may not be needed.

Ingredient vi) is a filler (such as glass balloons, glass fibers, ground glass, calcium carbonate, silica, talc, or combinations thereof).

When component x), the additional solvent is compounded with the PSA, the additional solvent may be the same as, or different from, the solvent used as ingredient (C).

The method of this invention may optionally further comprise recovering some or all of the volatile species. For example, the volatile species may be removed and the solvent may be recovered to remove water, volatile siloxanes, and catalyst, if any. This recovered solvent may be the additional solvent (ingredient x) may be the same as ingredient (C) described above). For example, some or all of the volatile species removed may subsequently be returned to the PSA. Some or all of the neopentamer may be recovered from the volatile species. Recovery of the volatile species may be performed using any convenient method such as phase separation to allow the water to separate by gravity, fractional distillation to separate single or multiple ingredients from the resulting stream before reintroducing the solvent to the PSA or formulation.

### Examples

The following examples are included to demonstrate the invention to one of ordinary skill in the art. However, those of skill in the art should, in light of the present disclosure, appreciate that many changes can be made in the specific embodiments which are disclosed and still obtain a like or similar result without departing from the spirit and scope of the invention.

### Comparative Example 1 - Control of Degree of Reaction

A mixture of gum and resin was heated in a laboratory three-neck flask at the reflux temperature of xylene (140 °C). The gum was a hydroxyl-terminated polydimethylsiloxane with a weight average molecular weight of 583,000 atomic weight units (a.w.u.) as measured by GPC. The resin was an MQ resin (where M stands for (CH₃)₃SiO_{1/2} and Q stands for SiO_{4/2}). The weight average molecular weight of the resin as measured by GPC was 16,000 a.w.u.

The gum and resin were mixed together such that the ratio of resin solids (*i.e*., resin solution less the fraction that is driven off when two grams were heated in an aluminum cup in an oven at 150 °C for 1 hour) to the gum was 0.55:0.45. The resin solution included some xylene and additional xylene was added to bring the concentration of solids to 56.5%.

To this mixture, a quantity of nonanoic acid was added such that the amount of nonanoic acid in the resulting solution was 0.8%.

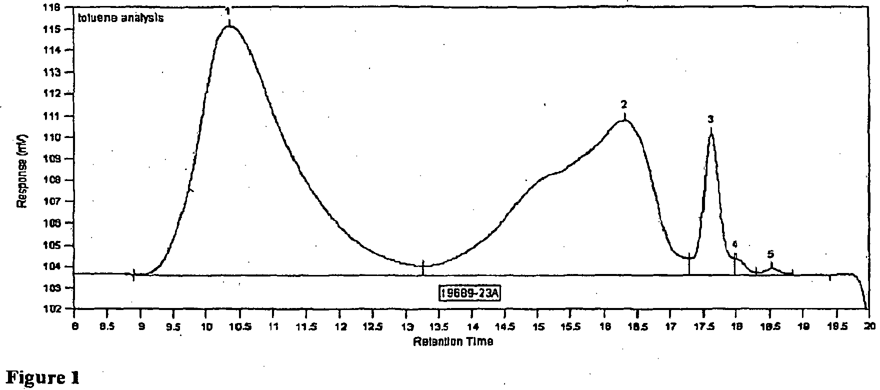

Samples were withdrawn at several times during the reaction process and analyzed by GPC. The results of the GPC analyses illustrate two points. First, the GPC output provides a relative measure of the quantity of volatile siloxanes present. An example GPC output is included in Figure 1. The peaks labeled as 3, 4, and 5 represent the volatile siloxanes present. The area percent of these peaks relative to the total area of the peaks provides a relative manner of measure the quantity of volatile siloxanes present. For this particular GPC trace, the area percent represented by peaks 3, 4, and 5 was 6.26%.

Two additional solutions were prepared as above except that the quantity of nonanoic acid was added such that the amount of nonanoic acid in the resulting solutions were 0.4 % and 1.6 %, respectively.

Samples were withdrawn at several times while the temperature was maintained at the reflux temperature of xylene and the condensed xylene was passed through a Dean-Stark trap to remove any water present before being returned to the flask. Each sample was analyzed by GPC and the area percent of the volatile siloxane peaks are plotted versus time in Figure 2. Over the 8.5 hours of reflux and reaction, the area percent of the volatiles remained essentially constant indicating volatiles were not being removed using the batch method of preparing PSAs.

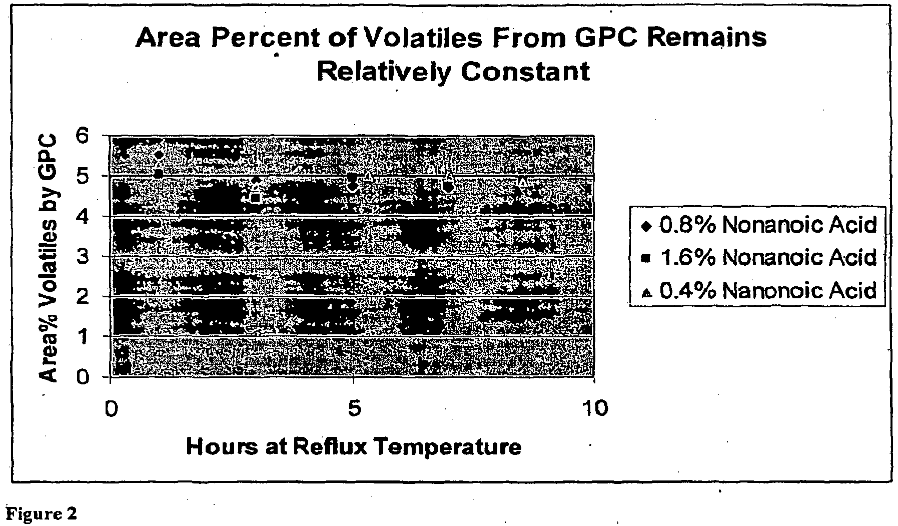

The weight average molecular weight for the samples taken at various times was plotted in Figure 3. The desired degree of reaction was attained when the molecular weight had reached 500,000 Mw. This required 1 hour with 1.6% nonanoic acid, 3 hours with 0.8% nonanoic acid, or 5 hours with 0.4% nonanoic acid.

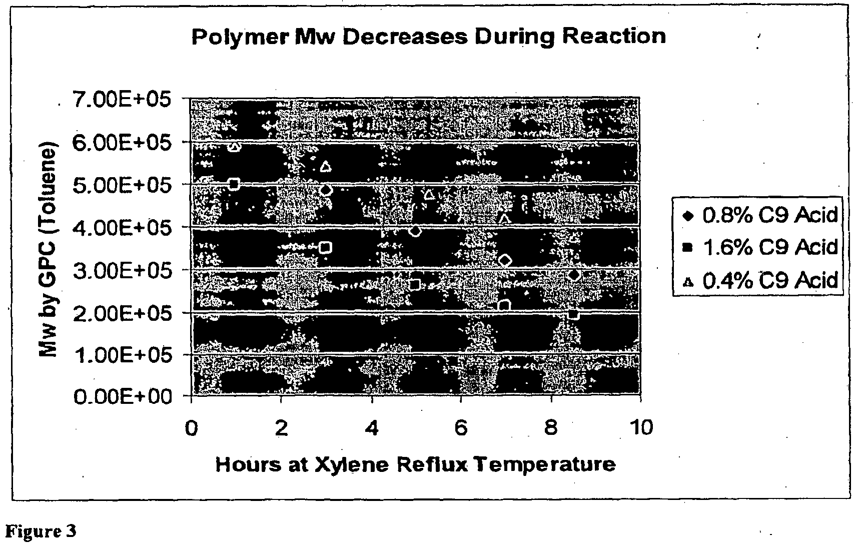

### Example 1 - Continuous Method

The same ingredients used in comparative example 1 were used to prepare a PSA according to the continuous method of this invention. The gum, resin, xylene (solvent), and nonanoic acid catalyst were fed into a twin-screw extruder where the resulting mixture was heated and devolatilized, and then cooled and resolvated. The gum was fed at a rate of 33.6 gm/min to a 30 mm twin-screw extruder. A solution of the resin and solvent was fed at a rate of 58 gm/min. The resin and solvent solution contained 71 % resin making the resin to gum ratio 0.55:0.45. A 5% solution of either nonanoic acid or benzoic acid in xylene was fed with the resin and polymer to the twin-screw extruder.

The mixture was conveyed by the twin-screw extruder through a reaction zone with two vacuum ports operated at approximately negative 25" Hg pressure, where the volatile species (water, xylene, and volatile siloxanes) were removed. The temperature of the reaction zone was varied, and samples were taken at several temperatures and analyzed. The quantity of volatile species decreased steadily with higher temperature as shown in Figure 4. However, even at the lowest temperature selected, the method ofthis invention produced a PSA with a lower level of volatile species than did the conventional batch method in comparative example 1. At the lowest temperature, the reduction was 50 %. At the highest temperature selected in this example, the reduction was 90 %. Example 1 demonstrates the usefulness of this method for removing volatile siloxanes.

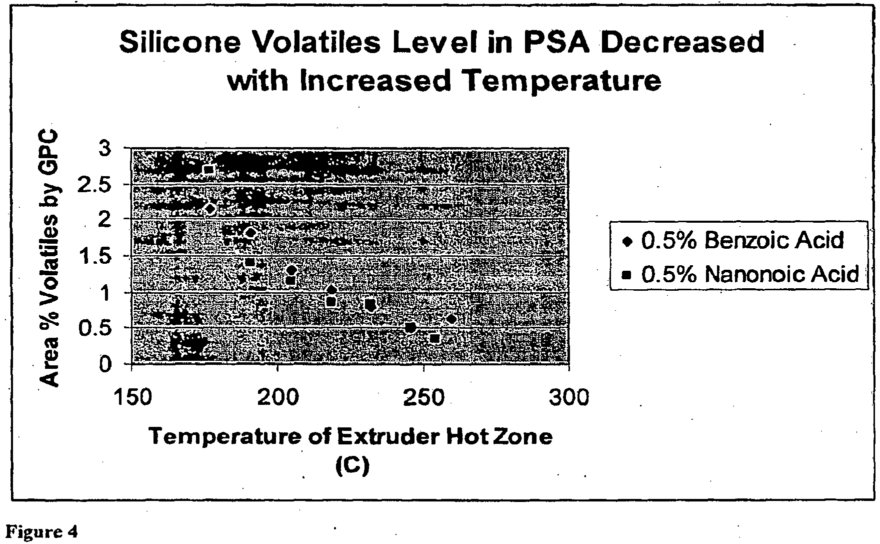

The samples taken at various temperatures were analyzed by GPC for molecular weight. The results are plotted in Figure 5. To achieve the molecular weight target of 500,000 Mw, the method may be operated at approximately 250 °C with 0.5% nonanoic acid as catalyst or 240 °C with 0.5% benzoic acid as catalyst in this example. Using these ingredients, the shape of the curve implies that possibly the desired molecular weight of 500,000 Mw could have been achieved with no added catalyst at a temperature of perhaps 280 °C.

Example 1 illustrates another useful feature of the method of this invention. When very low volatile siloxane content is desired, but a limited degree of reaction is desired, the use of less catalyst, or a less active catalyst, or even no catalyst at all while operating at a higher temperature to achieve the desired degree of reaction can result in an even greater reduction in volatile siloxane content.

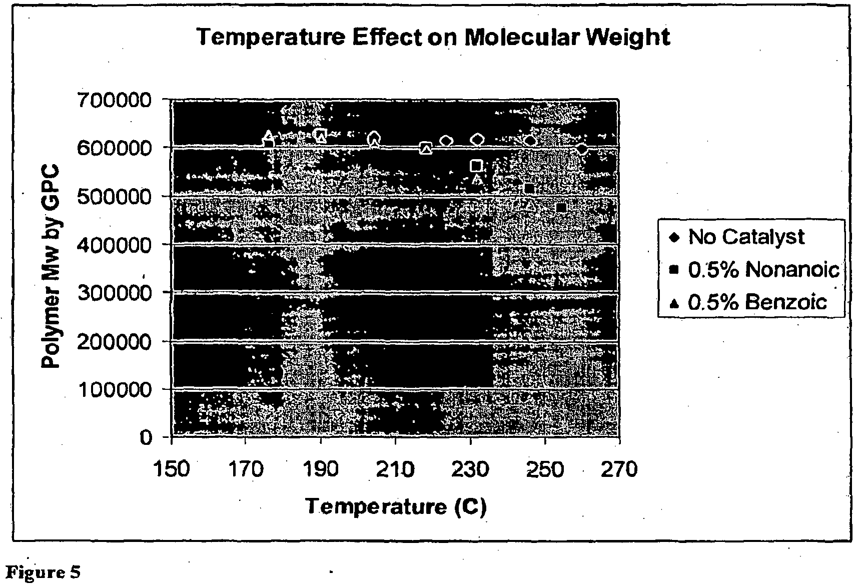

The samples prepared in example 1 using benzoic acid catalyst were analyzed to determine composition. The solutions were extracted with acetone, an internal standard of undecane was used, and the extract was analyzed via GC. The data in Table 1 were obtained. The method of this invention effectively reduced the quantity of neopentamer as well as the cyclic dimethylsiloxanes having 4, 5, 6, 7, 8, 9, and 10 dimethylsiloxane units (denoted D4 to D10). The benzoic acid was effectively removed as well.

**Table 1**

| Composition by Extraction in Acetone GC Analysis (ppm) | | | | | | | | | |
|---|---|---|---|---|---|---|---|---|---|
| | D4 | Benzoic Acid | D5 | Neopentamer | D6 | D7 | D8 | D9 | D10 |
| Gum and Resin Mixture | 2030 | | 4021 | 14517 | 2363 | 1190 | 927 | 487 | 426 |
| | | | | | | | | | |

| Residual Volatile Siloxanes in PSA after processing by the intensified method (ppm) | | | | | | | | | |
|---|---|---|---|---|---|---|---|---|---|
| Temperature(°C) | | | | | | | | | |
| 177 | 267 | 537 | 858 | 1564 | 559 | 415 | 415 | 268 | 267 |
| 191 | 92 | 549 | 745 | 1263 | 453 | 359 | 377 | 239 | 268 |
| 204 | 63 | 675 | 497 | 865 | 354 | 287 | 306 | 198 | 206 |
| 218 | 41 | 119 | 304 | 670 | 247 | 216 | 240 | 164 | 174 |
| 232 | 25 | 353 | 317 | 438 | 202 | 190 | 219 | 158 | 178 |
| 246 | 29 | 220 | 209 | 280 | 120 | 139 | 162 | 124 | 157 |
| 260 | 10 | 163 | 160 | 176 | 82 | 106 | 129 | 98 | 138 |

### Example 2 - Volatile Species Removal

A second example illustrates the utility of this method of preparing silicone pressure sensitive adhesives in removing undesirable silicone volatiles while also completing the desired reaction.

An undesirable impurity present in certain hydroxyl-functional polyorganosiloxane MQ resins is the neopentamer. The method of this invention effectively removes the neopentamer from the reaction mixture while completing the reaction. A reaction mixture was converted into a PSA by practicing this method in a twin-screw extruder. The reaction zone was controlled at various temperatures ranging from 177 to 260 °C, and samples were taken. The procedure was repeated at three different pressures; 25" Hg, 15" Hg, and 8" Hg. The results were plotted in Figure 6. The degree of removal of the neopentamer in this example is strongly affected by temperature and level of vacuum. For maximum removal, higher temperature and lower pressure may be used.

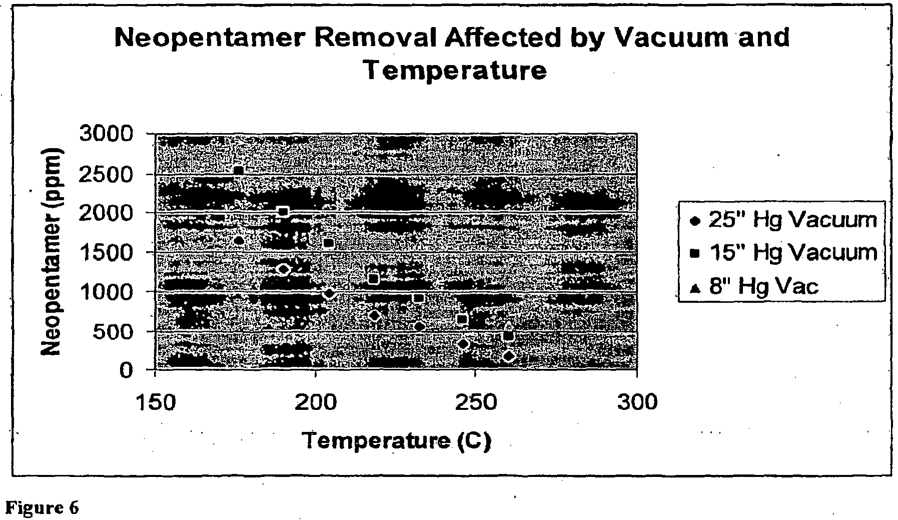

In the case where greater removal of volatile siloxanes is required and yet the degree of reaction desired is low, then the method may be performed using less catalyst, or even no catalyst, or possibly with a stabilizer, so the reaction rate is slower and the temperature can be increased to favor greater removal without causing too much reaction.

### Example 3 - Volatile Species Removal

In the reaction of this example, using a high temperature to remove the volatile siloxanes was undesirable. When high temperature to remove essentially all volatile siloxanes is undesirable, removal may be accomplished using multiple reaction zones.

A mixture of the gum and resin described in comparative example 1 was processed using the method of this invention in a twin-screw extruder. The product of a first pass through the reaction zone of the extruder was collected and fed back through the reaction zone a second time and again a third time. The quantity of neopentamer present after each pass was plotted in Figure 7.

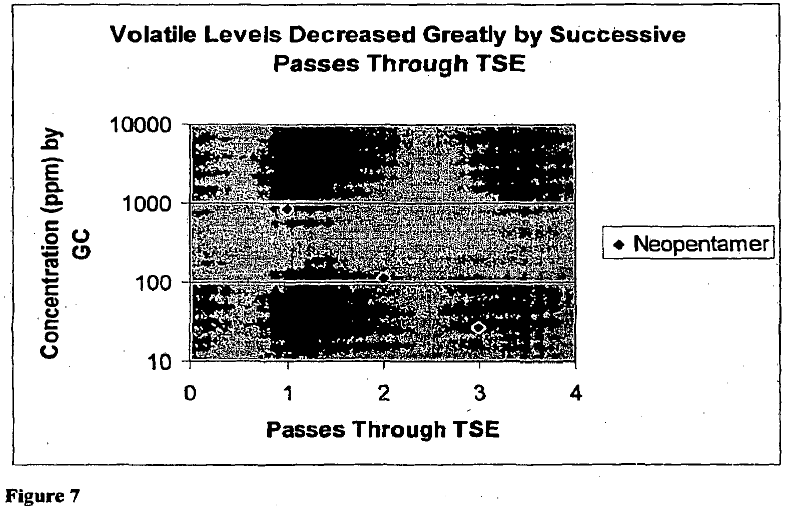

In this example the hot zone operated at 178 °C in each pass. This temperature resulted in little reaction in several of the examples above. This example demonstrates that using multiple passes through one reaction zone, or multiple reaction zones, would be a useful way of implementing the method of this invention.

### Example 4 - Volatile Species Removal

The gum and resin described in comparative example 1 were fed to a twin-screw extruder with multiple reaction zones run under vacuum. In one series of runs, vacuum was pulled on one of the zones. In another series of runs, vacuum was pulled on two zones. The data collected from these runs were plotted in Figure 8. In this example, adding vacuum enhances the removal of volatile siloxanes when practicing the method of this invention. Employing multiple reaction zones with vacuum provides an efficient way to make this method further reduce the amount of neopentamer in the PSA produced.

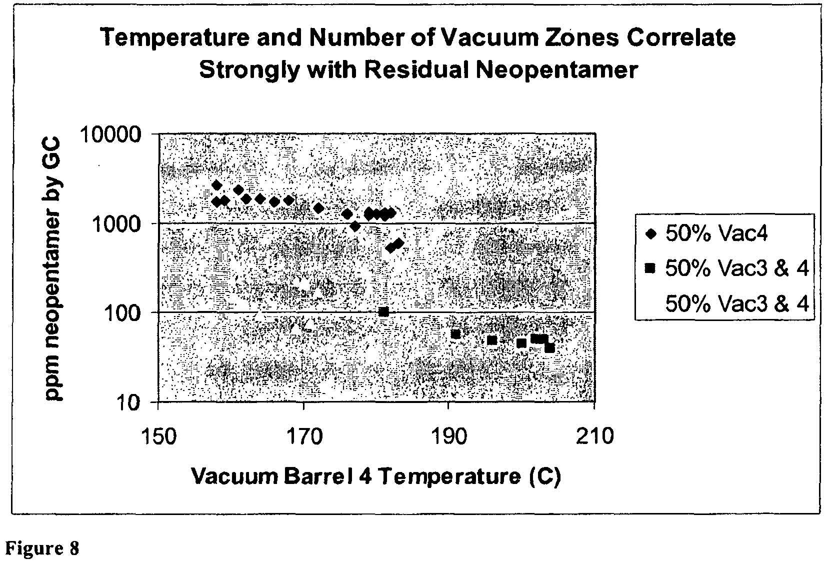

## Claims

1. A method comprising:
I) mixing ingredients comprising:
(A) a hydroxyl-functional polydiorganosiloxane polymer,
(B) a hydroxyl-functional polyorganosiloxane resin,
(C) a solvent,
(D) a catalyst selected from weak carboxylic acids or metal salt thereof wherein the metal is selected from Li, Na, K and Ca, and optionally
(E) a stabilizer; and
II) heating the ingredients at a temperature above the boiling point of the solvent as the ingredients pass through a reaction zone of a continuous mixing apparatus for a residence time sufficient for bodying ingredients (A) and (B) to produce a pressure sensitive adhesive containing volatile species comprising water, the solvent, the catalyst and volatile siloxanes; and
III) removing the volatile species from the pressure sensitive adhesive such that the volatile siloxane concentration in the pressure sensitive adhesive is less than or equal to 3 weight %,
the volatile siloxanes being selected from the neopentamer and unreactive cyclic polyorganosiloxanes D4-D10.

2. The method of claim 1 where the continuous mixing apparatus is a devolatilizing extruder.

3. The method of claim 2, where the extruder is a single-screw extruder.

4. The method of claim 2, where the extruder is a twin-screw extruder.

5. The method of claim 1, further comprising preparing the hydroxyl-functional polydiorganosiloxane polymer using a continuous process before mixing the ingredients.

6. The method of claim 1, further comprising compounding the pressure sensitive adhesive into a formulation comprising an additional ingredient selected from: i) an MQ resin, ii) a curable polydiorganosiloxane, iii) a catalyst, iv) a crosslinker, v) a cure modifier, vi) a filler, vii) a neutralizing agent, viii) a stabilization additive, ix) some or all of the volatile species, x) an additional solvent, xi) an adhesion promoter, and a combination thereof.

7. The method of claim 1, where ingredient (A) is HO(Me)₂SiO(Me₂SiO)ₐSi(Me)₂OH, HO(Me)₂SiO(Me₂SiO)_{0.94a}(Ph₂SiO)_{0.06a}Si(Me)₂OH, HO(Ph₂)SiO(Me₂SiO)_{0.94a}(Ph₂SiO)_{0.06a}Si(Ph₂)OH, HO(Me₂)SiO(Me₂SiO)_{0.95a}[(Vi)(Me)SiO]_{0.05a}Si(Me₂)OH, HO(Vi₂)SiO(Me₂SiO)_{0.95a}[(Vi)(Me)SiO]_{0.05a}Si(Vi₂)OH, or a combination thereof; where the average value of subscript a is such that it provides a viscosity at 25 °C ranging from 100 to 10,000,000 mm²/s, Me means methyl, Vi means vinyl, and Ph means phenyl.

8. The method of claim 1, where ingredient (B) comprises M units selected from Me₃SiO_{1/2}, Me₂ViSiO_{1/2}, Me₂PhSiO_{1/2}, Ph₂MeSiO_{1/2}, and combinations thereof; where Me means methyl, Vi means vinyl, and Ph means phenyl.

9. The method of claim 1, where ingredient (C) is benzene, toluene, xylene, naphtha, mineral spirits, or a combination thereof.

10. The method of claim 1, where mixing, heating, and removing essentially all volatile species are performed in a single continuous mixing apparatus.

11. The method of claim 1, where ingredients (B) and (C) are combined before beginning the method.

12. The method of claim 1, further comprising recovering solvent from the volatile species removed and adding recovered solvent to the pressure sensitive adhesive.

13. The method of claim 1, where the volatile siloxanes comprise a neopentamer and the method further comprises recovering the neopentamer.

## Patentansprüche

1. Verfahren umfassend:
I) das Vermischen von Bestandteilen, die Folgendes umfassen:
(A) ein funktionelles Hydroxylpolydiorganosiloxanpolymer,
(B) ein funktionelles Hydroxylpolyorganosiloxan-Harz,
(C) ein Lösungsmittel,
(D) einen Katalysator ausgewählt aus schwachen Carboxylsäuren oder Metallsalzen davon, wobei das Metall ausgewählt ist aus Li, Na, K und Ca, und wahlweise
(E) einem Stabilisierungsmittel, und
II) das Erwärmen der Bestandteile bei einer Temperatur oberhalb des Siedepunktes des Lösungsmittels, während die Bestandteile eine Reaktionszone einer Vorrichtung zum fortlaufenden Mischen durchlaufen, und zwar über eine Verweilzeit, die ausreicht, damit die Konsistenzbestandteile (A) und (B) einen druckempfindlichen Klebstoff erzeugen, der flüchtige Stoffe enthält, die Wasser, das Lösemittel, den Katalysator und flüchtige Siloxane umfassen; und
III) das Entfernen der flüchtigen Stoffe aus dem druckempfindlichen Klebstoff, so dass die Konzentration an flüchtigem Siloxan in dem druckempfindlichen Klebstoff weniger als oder gleich 3 Gewichts-% beträgt,
wobei die flüchtigen Siloxane ausgewählt werden aus dem Neopentamer und reaktionsunfähigen zyklischen Polyorganosiloxanen D4-D10.

2. Verfahren nach Anspruch 1, wobei die Vorrichtung zum fortlaufenden Mischen ein Entgasungsextruder ist.

3. Verfahren nach Anspruch 2, wobei der Extruder ein Einschrauben-Extruder ist.

4. Verfahren nach Anspruch 2, wobei der Extruder ein Doppelschrauben-Extruder ist.

5. Verfahren nach Anspruch 1, das ferner die Herstellung des funktionellen Hydroxylpolydiorganosiloxanpolymers mittels eines kontinuierlichen Verfahrens vor dem Vermischen der Bestandteile umfasst.

6. Verfahren nach Anspruch 1, das ferner das Einfügen des druckempfindlichen Klebstoffs in eine Zubereitung umfasst, die einen zusätzlichen Bestandteil umfasst ausgewählt aus: i) einem MQ-Harz, ii) einem härtbaren Polydiorganosiloxan, iii) einem Katalysator, iv) einem Vernetzungsmittel, v) einem Härtungsmodifikator, vi) einem Füllmittel, vii) einem Neutralisationsmittel, viii) einem Stabilisationszusatzstoff, ix) einigen oder allen der flüchtigen Stoffe, x) einem zusätzlichen Lösungsmittel, xi) einem Haftvermittler, und einer Kombination davon.

7. Verfahren nach Anspruch 1, wobei der Bestandteil (A) HO(Me)₂SiO(Me₂SiO)ₐSi(Me)₂OH, HO(Me)₂SiO(Me₂SiO)_{0,94a}(Ph₂SiO)_{0,06a}Si(Me)₂OH, HO(Ph₂)SiO(Me₂SiO)_{0,94a}(Ph₂SiO)_{0,06a}Si(Ph₂)OH, HO(Me₂)SiO(Me₂SiO)_{0,95a}[(Vi)(Me)SiO]_{0,05a}Si(Me₂)OH, HO(Vi₂)SiO(Me₂SiO)₀,₉₅ₐ[(Vi)(Me)SiO]_{0,05a}Si(Vi₂)OH, oder eine Kombination davon ist; wobei der Durchschnittswert des tiefgestellten Zeichens a derart ist, dass er bei 25 °C eine Viskosität im Bereich von 100 bis 10,000,000 mm²/s liefert, Me Methyl bedeutet, Vi Vinyl bedeutet, und Ph Phenyl bedeutet.

8. Verfahren nach Anspruch 1, wobei Bestandteil (B) M-Einheiten ausgewählt aus Me₃SiO_{1/2}, Me₂ViSiO_{1/2}, Me₂PhSiO_{1/2}, Ph₂MeSiO_{1/2}, und Kombinationen davon umfasst; wobei Me Methyl bedeutet, Vi Vinyl bedeutet, und Ph Phenyl bedeutet.

9. Verfahren nach Anspruch 1, wobei Bestandteil (C) Benzol, Toluol, Xylol, Naphtha, Terpentinersatz, oder eine Kombination davon ist.

10. Verfahren nach Anspruch 1, wobei das Mischen, Erwärmen und Entfernen von im Wesentlichen allen flüchtigen Stoffen in einer einzigen Vorrichtung zum fortlaufenden Mischen erfolgt.

11. Verfahren nach Anspruch 1, wobei die Bestandteile (B) und (C) miteinander kombiniert werden, ehe mit dem Verfahren begonnen wird.

12. Verfahren nach Anspruch 1, das ferner das Rückgewinnen von Lösungsmittel aus den entfernten flüchtigen Stoffen und das Hinzufügen des rückgewonnenen Lösemittels zum druckempfindlichen Klebstoff umfasst.

13. Verfahren nach Anspruch 1, wobei die flüchtigen Siloxane ein Neopentamer umfassen und das Verfahren ferner die Rückgewinnung des Neopentamers umfasst.

## Revendications

1. Procédé comprenant :
I) le mélange d'ingrédients comprenant :
(A) un polymère polydi-organosiloxane à fonction hydroxyle,
(B) une résine polyorganosiloxane à fonction hydroxyle,
(C) un solvant,
(D) un catalyseur choisi parmi les acides carboxyliques faibles ou un sel métallique de ceux-ci dans lequel le métal est choisi parmi Li, Na, K et Ca, et facultativement
(E) un agent stabilisant ; et
II) le chauffage des ingrédients à une température au-dessus du point d'ébullition du solvant à mesure que les ingrédients passent à travers une zone de réaction d'un appareil de mélange continu pendant un temps de séjour suffisant pour que les ingrédients de consistance (A) et (B) produisent un adhésif sensible à la pression contenant des espèces volatiles comprenant de l'eau, le solvant, le catalyseur et des siloxanes volatils ; et
III) l'élimination des espèces volatiles de l'adhésif sensible à la pression de telle sorte que la concentration en siloxane volatil dans l'adhésif sensible à la pression est inférieure ou égale à 3 % en poids,
les siloxanes volatils étant choisis parmi les polyorganosiloxanes cycliques néopentamères et non réactifs D4-D10.

2. Procédé selon la revendication 1, où l'appareil de mélange continu est une extrudeuse à dévolatilisation.

3. Procédé selon la revendication 2, où l'extrudeuse est une extrudeuse à vis unique.

4. Procédé selon la revendication 2, où l'extrudeuse est une extrudeuse à vis jumelées.

5. Procédé selon la revendication 1, comprenant en outre la préparation du polymère polydi-organosiloxane à fonction hydroxyle en utilisant un procédé continu avant de mélanger les ingrédients.

6. Procédé selon la revendication 1, comprenant en outre l'élaboration de l'adhésif sensible à la pression en une formulation comprenant un ingrédient additionnel choisi parmi : i) une résine MQ, ii) un polydi-organosiloxane durcissable, iii) un catalyseur, iv) un agent de réticulation, v) un agent modifiant le durcissement, vi) une charge, vii) un agent neutralisant, viii) un additif de stabilisation, ix) certaines ou toutes les espèces volatiles, x) un solvant supplémentaire, xi) un promoteur d'adhésion, et une combinaison de ceux-ci.

7. Procédé selon la revendication 1, où l'ingrédient (A) est HO(Me)₂SiO(Me₂SiO)ₐSi(Me)₂OH, HO(Me)₂SiO(Me₂SiO)_{0,94a}(Ph₂SiO)_{0,06a}Si(Me)₂OH, HO(Ph₂)SiO(Me₂SiO)_{0,94a}(Ph₂SiO)_{0,06a}Si(Ph₂)OH, HO(Me₂)SiO(Me₂SiO)_{0,95a}[(Vi)(Me)SiO]_{0,05a}Si(Me₂)OH, HO(Vi₂)SiO(Me₂SiO)_{0,95a[}(Vi)(Me)SiO]_{0,05a}Si(Vi₂)OH, ou une de leurs combinaisons ; où la valeur moyenne de l'indice a est telle qu'elle fournit une viscosité à 25 °C allant de 100 à 10 000 000 nm²/s, Me désigne méthyle, Vi désigne vinyle, et Ph désigne phényle.

8. Procédé selon la revendication 1, où l'ingrédient (B) comprend des motifs M choisis parmi Me₃SiO_{1/2}, Me₂ViSiO_{1/2}, Me₂PhSiO_{1/2}, Ph₂MeSiO_{1/2}, et leurs combinaisons ; où Me désigne méthyle, Vi désigne vinyle, et Ph désigne phényle.

9. Procédé selon la revendication 1, où l'ingrédient (C) est benzène, toluène, xylène, naphte, essences minérales, ou une de leurs combinaisons.

10. Procédé selon la revendication 1, où le mélange, le chauffage, et l'élimination de pratiquement toutes les espèces volatiles sont exécutés dans un seul appareil de mélange continu.

11. Procédé selon la revendication 1, où les ingrédients (B) et (C) sont combinés avant de commencer le procédé.

12. Procédé selon la revendication 1, comprenant en outre la récupération du solvant des espèces volatiles éliminées et l'ajout du solvant récupéré à l'adhésif sensible à la pression.

13. Procédé selon la revendication 1, où les siloxanes volatils comprennent un néopentamère et le procédé comprend en outre la récupération du néopentamère.
